# EUROPEAN PATENT SPECIFICATION

(11) **EP 0 379 090 B1**
(45) Date of publication and mention of the grant of the patent: **30.03.1994**
(21) Application number: 90100626.2
(22) Date of filing: 12.01.1990
(51) Int. Cl.: G01N 1/22

(54) **Analyser for gas from an extraction furnace**
Analysegerät für Gas aus einem Extraktionsofen
Analyseur de gaz provenant d'un four d'extraction

(30) Priority: 14.01.1989 JP 2975/89 U
(43) Date of publication of application: 25.07.1990
(73) Proprietor: HORIBA, LTD., Minami-ku Kyoto (JP)
(72) Inventor: Nishioka, Yasuyuki, Nagaokakyo-City, Kyoto (JP); Hirano, Akihiro, Souraku-gun, Kyoto (JP)
(74) Representative: TER MEER STEINMEISTER & PARTNER GbR

(56) References cited:
- GB-A- 2 052 055
- PATENT ABSTRACTS OF JAPAN, vol. 13, no. 559 (P-905)[3907], 12th December 1989; & JP-A-1 230 917

## Description

The present invention relates to a sample analyzer in which a gas from an extraction furnace is introduced into a detector to be analyzed.

One type of such sample analyzers is used for analyzing oxygen and nitrogen contained in a sample such as metal. However, in the case where a high-concentration sample containing a relatively large amount of oxygen and nitrogen therein, such as oxide ceramics and nitride ceramics, is analyzed, a buffer vessel for suppressing a momentary concentration of gases (CO, N₂) generated in an extraction furnace is required between the extraction furnace and the detector. On the other hand, in the case where a low-concentration sample containing merely a relative small amount of oxygen and nitrogen therein, such as oxygen and nitrogen in iron and steel or oxygen and nitrogen as impurities in ceramics, is analyzed, said buffer vessel is unnecessary and has to be removed.

GB-A-2052055 reveals an apparatus where gases are lead from a blast furnace via a constant volume buffer eventually to an analyser.

However, the installation and removal of such a buffer vessel is labour-intensive depending upon whether an object to be analyzed is a high-concentration sample or not, and since a rather long stabilization time of the detector has to be taken into account, the analysis of various samples takes a long time. In the case where high-concentration values and low-concentration values occur at random, the inconvenience is still more expanded and an adaptation of the measuring device becomes particularly difficult.

It is an object of the present invention to provide a sample analyzer capable of executing specific analysis within a short time without requiring the above described troublesome labour and adaptation time.

In order to achieve the above described object, a sample analyzer according to the present invention in which gas from an extraction furnace is introduced for analysation purposes into a buffer vessel associated with a detector is characterized in that the internal capacity of said buffer vessel is variable.

With the above described construction, an analysis of the above mentioned kind can be surely executed by reducing the internal capacity of the buffer vessel when a low-concentration sample is analyzed and by increasing the vessel capacity when a high-concentration sample is to be analyzed. Since merely the internal capacity of one buffer vessel is to be changed, an exchange of the whole buffer vessel as in the conventional analyzer is dispensed with. In addition, it hardly takes any time until the stabilization of the detector is achieved, so that the time required for the analysis is considerably reduced. Furthermore, the analysis can be continuously executed from a low-concentration range to a high-concentration range by means of a single buffer vessel.

Further details of the invention and preferred embodiments will be described in the following with reference to the accompanying drawings, in which
Fig. 1 is a block diagram showing a sample analyzer according to the present invention;
Fig. 2 is a section view showing one example of a buffer vessel to be used in connection with the invention; and
Fig. 3 is a block diagram showing a sample analyzer according to another preferred embodiment of the present invention.

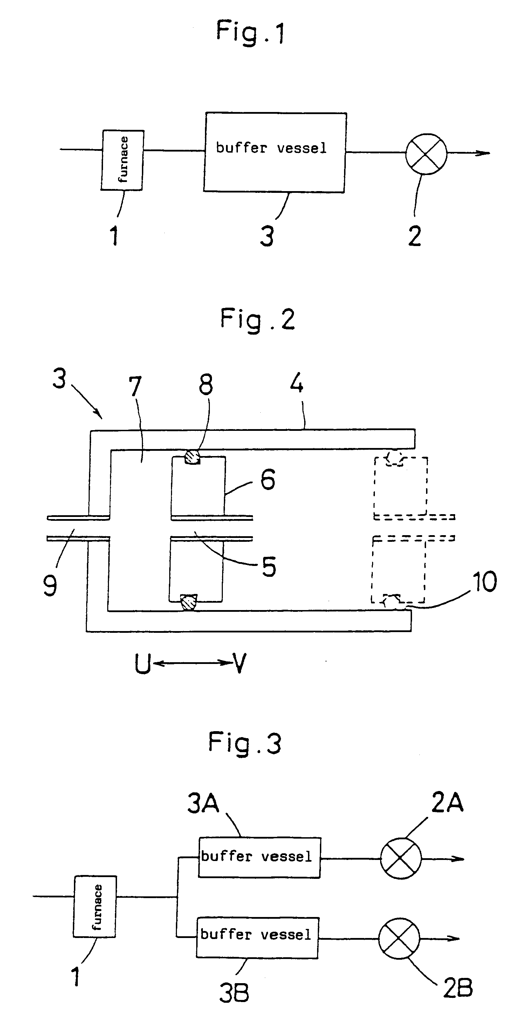

Referring to Fig. 1, although not shown in detail, reference numeral 1 designates an extraction furnace provided with a pair of electrodes for contacting an electrical AC heating of a crucible, in which for example a sample is housed. Reference numeral 2 designates a detector provided in an analytical portion, for example an infrared detector for detecting the concentration of oxygen. A buffer vessel 3 is disposed between the extraction furnace 1 and the detector 2, said buffer vessel 3 comprising a cylindrical stationary vessel 4 and a piston member 6 provided with a gas passage 5 and adapted to be slidable in directions of a double pointed arrow U - V. The internal capacity of a chamber 7 connected with the extraction furnace 1 is adapted to be changed by sliding said piston member 6 in said directions by means of a driving mechanism (not shown). Reference numeral 8 designates a sealing member, such as an O-ring, provided around the periphery of the piston member 6. A gas passage 9 is formed in said chamber 7, and reference numeral 10 designates a gas-outlet toward the detector 2.

With the sample analyzer having the above described construction, in the case where a low-concentration sample is measured, the piston member 6 is shifted in the direction of the arrow U shown in Fig. 2 to reduce the internal capacity of the chamber 7. On the other hand, in the case where a high-concentration sample is measured, the piston member 6 is shifted in the direction of the arrow V shown in Fig. 2 to increase the internal capacity of the chamber 7. By use of such a capacity modified vessel 4 an appointed analysis can be accurately executed.

According to the above-described construction, even if the concentration of the sample is different from an expected range, the analysis can be carried out without interruption. That is to say, in the case where for example the concentration of the sample is actually higher even though the internal capacity of the chamber 7 is set to a small volume on the basis of the expected small concentration, the piston member 6 can be simply shifted in the direction of the arrow V to increase the internal capacity of the chamber 7, instantly adapting the analyzing device to the above described new and unexpected situation. In particular, since the concentration ranges can be wide for the analysis of new materials, inconveniences that have occured in operating the prior analyzers, can satisfyingly be overcome with the invention.

Fig. 3 shows another preferred embodiment of the present invention in which oxygen and nitrogen can be independently and simultaneously analyzed, respectively.

In Fig. 3, reference numerals 3A, 3B designate a parallel arrangement of buffer vessels having the same construction as the buffer vessel 3 of Fig. 2. Detectors 2A, 2B are connected at the downstream side of the buffer vessels 3A, 3B, respectively. For example, the detector 2A is an infrared ray detector for detecting oxygen and the detector 2B is a thermal conductivity type detector for detecting nitrogen.

With the sample analyzer having such a construction, in the case where the concentration of oxygen in the sample is high and that of nitrogen is low, or the case where the concentration of oxygen is low and that of nitrogen is high, or the case where both the concentrations of oxygen and that of nitrogen are high (or low), a specific analysis can be accurately carried out by appropriately setting the internal capacity of the chamber in the buffer vessels 3A, 3B, respectively.

In many cases, the content of oxygen in the sample is extremely different from the content of nitrogen in the same sample - for example, in the case where the sample is Si₃N₄, - the content of nitrogen is 30 to 50 wt% while the content of oxygen is only 0.01 to 5 wt%. In such a case, an optimization of the buffer capacity is required for every ingredient to be measured, but the present invention can satisfyingly cope with such severe conditions.

As above described, according to the present invention, a specific analysis not only for low-concentration samples but also for high-concentration samples can be carried out within a short time without requiring a troublesome labour-intensive adjustment procedure as with the prior art analyzer. In addition, according to the present invention, a continuous analysis is possible, so that the invention is well suited for mass analysis.

## Claims

1. A sample analyzer, comprising a buffer vessel (3) into which a gas from an extraction furnace (1) is introduced for analysation, and a detector (2) with which said buffer vessel is associated, **characterized in** that the internal capacity of said buffer vessel (3) is variable.

2. The sample analyzer as set forth in Claim 1, in which said buffer vessel (3) comprises a cylindrical stationary vessel (4) in which a slideable piston member (6) provided with a gas passage (5) is arranged.

3. The sample analyzer as set forth in Claim 2, in which a plurality of buffer vessels (3A, 3B) are connected with the extraction furnace (1) in parallel to each other and respective corresponding detectors (2A, 2B) are connected with said buffer vessels (3A, 3B).

## Patentansprüche

1. Probenanalysegerät mit einem Puffergefäß (3), in das Gas von einem Extraktionsofen (1) zur Analyse eingeleitet wird, und einem Detektor (2), dem das Puffergefäß zugeordnet ist, **dadurch gekennzeichnet**, daß das Fassungsvermögen des Puffergefäßes (3) veränderbar ist.

2. Probenanalysegerät nach Anspruch 1, bei dem das Puffergefäß (3) ein zylindrisches, feststehendes Gefäß (4) aufweist, in dem ein mit einem Gaskanal (5) versehenes, verschiebbares Kolbenteil (6) angeordnet ist.

3. Probenanalysegerät nach Anspruch 2, bei dem mehrere Puffergefäße (3A, 3B) parallel mit dem Extraktionsofen (1) verbunden sind, und jeweils zugehörige Detektoren (2A, 2B) mit den Puffergefäßen (3A, 3B) verbunden sind.

## Revendications

1. Analyseur d'échantillon comprenant un récipient tampon (3) dans lequel un gaz provenant d'un four d'extraction (1) est introduit pour analyse, et un détecteur (2) avec lequel ledit récipient tampon est associé, caractérisé en ce que la capacité interne dudit récipient tampon (3) est variable.

2. Analyseur d'échantillon comme exposé dans la revendication 1, dans lequel ledit récipient tampon (3) comprend un récipient immobile cylindrique (4) dans lequel un élément piston coulissant (6) pourvu d'un passage de gaz (5) est arrangé.

3. Analyseur d'échantillon comme exposé dans la revendication 2, dans lequel une pluralité de récipients tampon (3A, 3B) sont connectés au four d'extraction (1) en parallèle les uns avec les autres et les détecteurs correspondants respectifs (2A, 2B) sont connectés avec lesdits récipients tampon (3A, 3B).
